# FASCICULE DE BREVET EUROPEEN

(11) **EP 0 395 462 B1**
(45) Date de publication et mention de la délivrance du brevet: **28.07.1993**
(21) Numéro de dépôt: 90400854.7
(22) Date de dépôt: 29.03.1990
(51) Int. Cl.: B60T 8/30, B60T 8/18

(54) **Correcteur de freinage**
Bremskraftregler
Brake-pressure regulator

(30) Priorité: 28.04.1989 FR 8905659
(43) Date de publication de la demande: 31.10.1990
(73) Titulaire: ALLIEDSIGNAL EUROPE SERVICES TECHNIQUES, 93700 Drancy (FR)
(72) Inventeur: Levrai, Roland, Bendix Europe Services Technique, F-93700 Drancy (FR)
(74) Mandataire: Bentz, Jean-Paul

(56) Documents cités:
- EP-A- 0 156 666
- EP-A- 0 223 641
- DE-A- 2 018 538
- FR-A- 2 564 401
- GB-A- 2 184 803
- GB-A- 2 192 246
- PATENT ABSTRACTS OF JAPAN, vol. 8, no. 108 (M-297)[1545], 19 mai 1984;& JP-A-59 18 055 (AISIN SEIKI K.K.) 30-01-1984

## Description

La présente invention concerne les correcteurs de freinage pour véhicules automobiles permettant de réduire la pression du liquide de frein dans le circuit de freinage des roues arrière par rapport à celle du liquide de frein dans le circuit de freinage des roues avant en fonction de la charge du véhicule.

L'invention concerne plus particulièrement un correcteur de freinage asservi à la charge d'un véhicule par un moyen fluidique agissant sur un premier piston mobile en translation dans un alésage pratiqué dans le corps dudit correcteur, ledit premier piston étant pourvu d'un poussoir susceptible de coopérer avec une extrémité d'un second piston faisant partie d'une valve ouverte en position de repos.

Un correcteur de ce type est connu dans l'art antérieur et décrit dans le document GB-A-2 184 803.

Dans ce type de correcteur, la valve ouverte en position de repos commande de passage de liquide de frein entre une chambre de travail d'un maître-cylindre et le circuit de freinage des roues arrière d'un véhicule.

Lors de l'application d'une pression au liquide de frein, dans un premier temps, la valve étant ouverte, la pression est communiquée intégralement au circuit de freinage. Puis, lorsque la pression atteint un valeur déterminée, le piston ferme la valve en se déplaçant légèrement. Si la pression dans le maître-cylindre continue à augmenter, la valve s'ouvre et se ferme de manière à augmenter proportionnellement la pression dans le circuit de freinage. Lorsque la charge du véhicule augmente, la force exercée par le poussoir sur le second piston à l'encontre de la force exercée sur ce dernier par la pression du liquide de frein augmente avec cette charge, de sorte que la fermeture de la valve s'effectue à des valeurs de la pression du liquide de frein d'autant plus grandes que la charge est élevée.

De tels correcteurs fonctionnent de façon tout à fait satisfaisante. Toutefois, la valve ne se fermant que pour une position prédéterminée du second piston par rapport au corps de valve, et le second piston, poussé par la pression du liquide de frein, devant faire reculer le poussoir et le premier piston sur une distance d'autant plus grande que la charge du véhicule est élevée pour atteindre lui-même la position prédéterminée pour laquelle la valve se ferme,
cette fermeture sera d'autant plus retardée, par rapport à la valeur de la pression du liquide de frein à laquelle elle devrait normalement se produire, que la charge du véhicule sera élevée.

Dans ce contexte, l'invention a pour but de proposer un correcteur de freinage simple, peu coûteux et néanmoins libéré du défaut précédemment identifié.

A cette fin, le correcteur de freinage de l'invention est essentiellement caractérisé en ce que des moyens sont prévus pour maintenir au repos, entre ladite extrémité dudit second piston et ledit poussoir, une distance déterminée non nulle et inférieure au déplacement que doit effectuer le second piston pour fermer la valve, l'extrémité du second piston et le poussoir n'entrant ainsi en contact que juste avant fermeture de la valve, en ce que ledit poussoir est, au repos, en butée axiale contre une partie fixe dudit corps, et en ce que ledit second piston est rappelé au repos au moyen d'un ressort.

Un ressort est de préférence disposé entre ledit poussoir et ledit premier piston pour permettre au poussoir de ne pas être en contact au repos avec le premier piston.

Ladite partie fixe du corps est par exemple constituée par une douille montée solidaire de ce corps et l'extrémité du poussoir en regard du second piston est pourvue d'une tête.

Par ailleurs une entretoise annulaire peut être vissée, sur la tête du poussoir pour venir en butée, au repos, contre la partie fixe du corps.

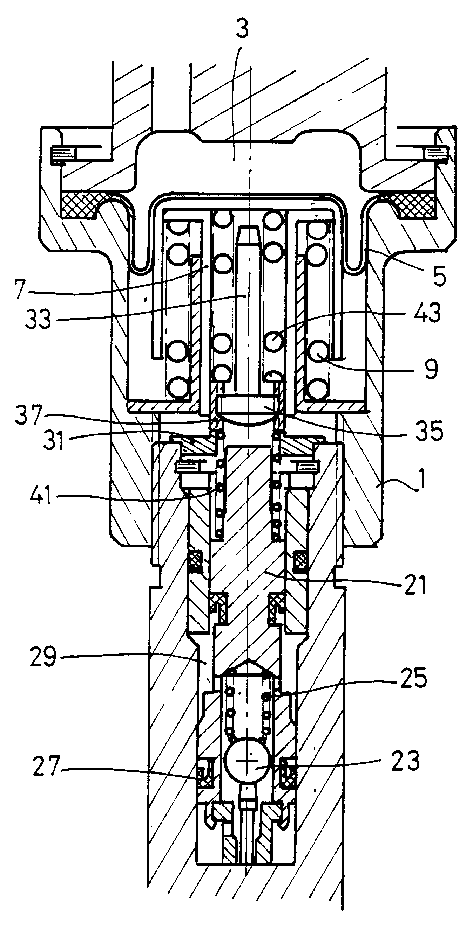

L'invention sera mieux comprise et d'autres buts, avantages et caractéristiques de celle-ci apparaitront plus clairement à la lecture de la description qui suit d'un mode de réalisation donné à titre non limitatif et à laquelle une planche de dessin est jointe sur laquelle :
- la Figure unique représente schématiquement en coupe un correcteur de freinage conforme à la présente invention.

En référence maintenant à cette Figure unique, le correcteur comporte un corps 1. Dans ce corps, l'homme du métier reconnaitra aisément la chambre 3 reliée de façon conventionnelle à un coussin hydrostatique placé près du système de suspension du véhicule (non représenté). Une membrane 5 rend étanche cette chambre 3 par rapport au reste du correcteur, et appuie sur un piston 7 mobile à coulissement à l'encontre d'un ressort 9.

La valve est constituée par un second piston 21 et un élément de clapet 23, ici une bille rappelée par un ressort 25. Une coupelle d'étanchéité 27 assure l'étanchéité de la chambre 29 qui est reliée au maître-cylindre (non représenté), par rapport au circuit de sortie relié aux moteurs de frein des roues arrière (non représentés) lorsque la valve est fermée.

Conformément à l'invention, une douille 31 est fixée dans l'alésage de manière à constituer une butée pour le poussoir 33 coopérant avec le premier piston 7. Dans le mode de réalisation représenté, le poussoir 33 est pourvue d'une tête 35 en regard du second piston 21. Un anneau fileté 37 est vissé sur cette tête 35 de façon à former une entretoise annulaire entre la tête 35 du poussoir 33 et la douille 31. Cet anneau permet de régler par simple vissage la hauteur de l'entretoise. Bien évidemment, s'il n'y a pas besoin de régler cette hauteur, il suffit d'utiliser un poussoir 33 pourvu d'une tête d'une taille suffisante pour venir en butée sur la douille 31 dont on prévoira l'épaisseur en conséquence. Un ressort 41 est disposé de manière à rappeler le second piston 21 au repos, en position d'ouverture de la valve. Dans l'exemple représenté, ce ressort s'appuie sur l'anneau 37. Toutefois il pourrait également s'appuyer sur la douille 31.

Enfin, dans l'exemple illustré, le poussoir 33 n'est pas solidaire du piston 7, mais coopère avec ce dernier par l'intermédiaire d'un ressort 43 permettant au poussoir 33 de ne pas être en contact au repos avec le piston 7 et assurant à la chambre 3 une possibilité de s'agrandir en fonction de la charge du véhicule tout en augmentant la force exercée sur le poussoir 33 de façon correspondante.

Lorsque la pression du liquide de frein croit dans le maître-cylindre, le second piston 21 se déplace en direction de la tête du poussoir 33 seulement à l'encontre de la force exercée par le ressort 41, dont la raideur pourra être favorablement choisie en fonction du point de coupure minimal souhaité du correcteur, c'est à dire de la pression pour laquelle la valve doit se fermer et de la force engendrée par le frottement des coupelles.

Le déplacement du second piston 21 qui ne s'effectue alors pas à l'encontre du premier piston 7, est alors aisé.

Lorsque la pression augmente encore, juste avant d'arriver au point de coupure minimal souhaité, le second piston 21 vient en contact de la tête 35 du poussoir 33.

A titre d'exemple, on peut dire que la hauteur de l'entretoise 37 est choisie de telle manière que ce contact soit obtenu entre second piston 21 et tête 35 alors que le second piston 21 a encore 0,2 mm à parcourir pour fermer la valve. Dans un exemple de réalisation, la distance au repos entre la tête 35 du poussoir et l'extrémité du second piston 21 était de l'ordre de 3 mm.

A ce moment, la force qui détermine le point de coupure est appliquée au second piston 21 par l'intermédiaire du poussoir 33, du ressort 43, et du premier piston 7.

On constate ici que l'accroissement de la pression du liquide de frein dans la chambre 29 n'a pas d'effet direct sensible sur la position du premier piston 7 et il n'en résulte donc pas de modification inopportune du point de coupure.

Si la pression augmente encore, le compensateur agit de manière conventionnelle.

Bien que seul un mode préféré de réalisation ait été décrit, on aura compris que l'Homme du métier pourra apporter de nombreuses modifications sans sortir du cadre de l'invention. On a cité précédemment par exemple une modification possible de la tête 35 du poussoir 33 permettant de supprimer l'anneau 37. Mais il faut également dire que le poussoir 33 pourrait être solidaire du piston 7, le ressort 43 étant alors supprimé. Par ailleurs, la douille 31 pourrait aussi être supprimée, la position et la forme de la coupelle d'appui du ressort 9 étant alors modifiées pour que la base de cette coupelle fasse office de butée pour la tête 35 du poussoir 33. Enfin, on a représenté une valve à bille, mais d'autres types de valve pourrait être utilisés.

## Revendications

1. Correcteur de freinage asservi à la charge d'un véhicule par un moyen fluidique agissant sur un premier piston (7) mobile en translation dans un alésage pratiqué dans le corps (1) dudit correcteur, ledit premier piston (7) étant pourvu d'un poussoir (33) susceptible de coopérer avec une extrémité d'un second piston (21) faisant partie d'une valve ouverte en position de repos, caractérisé en ce que des moyens (31,37) sont prévus pour maintenir au repos, entre ladite extrémité dudit second piston (21) et ledit poussoir (33), une distance déterminée non nulle et inférieure au déplacement que doit effectuer le second piston pour fermer la valve, l'extrémité du second piston et le poussoir n'entrant ainsi en contact que juste avant fermeture de la valve, en ce que ledit poussoir (33) est, au repos, en butée axiale contre une partie fixe (31) dudit corps (1), et en ce que ledit second piston (21) est rappelé au repos au moyen d'un ressort (41).

2. Correcteur selon la revendication 1, caractérisé en ce qu'un ressort (43) est disposé entre ledit poussoir (33) et ledit premier piston (7) pour permettre au poussoir (33) de ne pas être en contact au repos avec le premier piston (7).

3. Correcteur selon la revendication 1 ou 2, caractérisé en ce que ladite partie fixe dudit corps est constituée par une douille (31) montée solidaire dudit corps (1).

4. Correcteur selon l'une quelconque des revendications précédentes, caractérisé en ce que l'extrémité dudit poussoir (33) en regard dudit second piston (21) est pourvue d'une tête (35).

5. Correcteur selon la revendication 4, caractérisé en ce qu'une entretoise annulaire (37) est vissée sur la tête (35) dudit poussoir (33) pour venir en butée, au repos, contre ladite partie fixe (31) du corps (1).

## Patentansprüche

1. Bremskraftregler, der von der Last eines Fahrzeugs durch ein Fluidmittel gesteuert ist, das einen ersten Kolben (7) beaufschlagt, der in einer in dem Körper (1) des Reglers ausgebildeten Bohrung verschiebbar ist, wobei der erste Kolben (7) mit einem Stößel (33) versehen ist, der mit einem Ende eines zweiten Kolbens (21) zusammenarbeitet, der Teil eines Ventils ist, das in einer Ruhelage offen ist, dadurch gekennzeichnet, daß Mittel (31, 37) vorgesehen sind, um in der Ruhelage zwischen dem Ende des zweiten Kolbens (21) und dem Stößel (33) eine vorbestimmte Entfernung aufrechtzuerhalten, die nicht Null und kleiner als die Strecke ist, um die der zweite Kolben verschoben werden muß, um das Ventil zu schließen, so daß das Ende des zweiten Kolbens und der Stößel erst unmittelbar vor dem Schließen des Ventils miteinander in Kontakt sind, daß der Stößel (33) in der Ruhelage axial an einem festen Teil (31) des Körpers (1) anliegt, und daß der zweite Kolben (21) mittels einer Feder (41) in die Ruhelage zurückgestellt ist.

2. Regler nach Anspruch 1, dadurch gekennzeichnet, daß eine Feder (43) zwischen dem Stößel (33) und dem ersten Kolben (7) angeordnet ist, um zu ermöglichen, daß der Stößel (33) in der Ruhelage nicht mit dem ersten Kolben (7) in Kontakt ist.

3. Regler nach Anspruch 1 oder 2, dadurch gekennzeichnet, daß der feste Teil des Körpers durch eine Hülse (31) gebildet ist, die fest mit dem Körper (1) verbunden ist.

4. Regler nach einem der vorhergehenden Ansprüche, dadurch gekennzeichnet, daß das dem zweiten Kolben (21) gegenüberliegende Ende des Stößels (33) mit einem Kopf (35) versehen ist.

5. Regler nach Anspruch 4, dadurch gekennzeichnet, daß ein ringförmiges Abstandsstück (37) auf den Kopf (35) des Stößels (33) aufgeschraubt ist, um in der Ruhelage mit dem festen Teil (31) des Körpers (1) in Anlage zu kommen.

## Claims

1. Brake regulator controlled by the load of a vehicle using a fluidic means which acts on a first piston (7) capable of translatory movement in a bore formed in the body (1) of said regulator, said first piston (7) being provided with a push rod (33) capable of cooperating with one end of a second piston (21) forming part of a valve which is open in the rest position, characterized in that means (31, 37) are provided for maintaining, at rest, between said end of said second piston (21) and said push rod (33), a specific distance which is non-zero and smaller than the displacement which the second piston must execute in order to close the valve, the end of the second piston and the push rod thus coming into contact only just before the closing of the valve, in that, at rest, said push rod (33) is in axial abutment against a stationary part (31) of said body (1), and in that said second piston (21) is returned to rest by means of a spring (41).

2. Regulator according to Claim 1, characterized in that a spring (43) is arranged between said push rod (33) and said first piston (7) to make it possible for the push rod (33) not to be in contact, at rest, with the first piston (7).

3. Regulator according to Claim 1 or 2, characterized in that said stationary part of said body consists of a bush (31) mounted integral with said body (1).

4. Regulator according to any one of the preceding claims, characterized in that the end of said push rod (33) facing said second piston (21) is provided with a head (35).

5. Regulator according to Claim 4, characterized in that an annular distance piece (37) is screwed onto the head (35) of said push rod (33) in order to come into abutment, at rest, against said stationary part (31) of the body (1).
